# EUROPEAN PATENT APPLICATION

(11) **EP 1 246 097 A1**
(43) Date of publication of application: **02.10.2002**
(21) Application number: 01302944.2
(22) Date of filing: 29.03.2001
(51) Int. Cl.: G06F 17/60, G06F 9/46

(54) **Work allocation system**

(71) Applicant: BRITISH TELECOMMUNICATIONS public limited company, London EC1A 7AJ (GB)
(72) Inventor: The designation of the inventor has not yet been filed
(74) Representative: Walaski, Jan Filip

(57) **Abstract**

A work allocation system which uses a system of agents that allocate work via a market based and preference learning mechanism. Work is allocated by the agents operating in a marketplace using contract net based negotiation and a learning algorithm is used to form profiles and preferences for each worker that is managed in a workgroup, so that the mediator agent for that workgroup can allocate appropriate work and use the profile of a worker's learned working preferences to decide its bidding strategy. A scheduler is also used to decide the pricing of work offered by mediators to workers.

## Description

The present invention relates to a work allocation system, particularly but not exclusively to a market based and preference learning work allocation system.

Work allocation systems are well known and go under many different names, including schedulers, resource allocation systems, workflow systems and so on. Essentially, all such systems are concerned with optimising the allocation of a plurality of resources to a plurality of tasks. A known dynamic scheduler works by calculating the optimal tools for all the workers on its books to do the work on its work stack. These tools are recalculated every 15 minutes, so that as the operational situation changes, the system's response to it is also updated. The problem with this system is that in an operational scenario, it is open to abuse through the practice of "assisting". The work controllers tend to pre-allocate a large number of jobs because field engineers have expressed a preference for them. This is done without regard to the schedule and can be very disruptive.

The present invention aims to obviate the above problems. According to the present invention, there is provided a work allocation system for allocating work items between a plurality of workgroups, comprising a work source agent for providing a work item and a plurality of mediator agents, each associated with a respective workgroup, wherein each of the mediator agents is configured to request the work item from the work source agent in dependence on preference data for its respective workgroup.

The preference data can comprise the preferences that each of the workers in a workgroup has for a particular type of work. The preference data can be learned by each of the mediator agents and updated when a worker joins or leaves the workgroup. The work source agent can be arranged to offer the work item to the mediator agents at a cost which depends on its operational priorities, which can include the urgency of the work items and/or a value associated with an entity which originates the work item, for example the value of the customers according to a predetermined model.

The mediator agents can bid for the work item in accordance with their respective operational priorities.

Once a work item is acquired, the mediator agent for a given workgroup can offer the work item to each of the workers in the workgroup, the price for different workers depending on characteristics associated with those workers. These characteristics can include the efficiency with which a given worker can complete the work item, so that the mediator agent can price the work item to ensure that its value is greater to a more efficient worker.

According to the present invention, there is also provided a method of allocating work items between a plurality of workgroups, in which a plurality of mediator agents, each associated with a respective workgroup, is arranged to request a work item from a work source agent, the method including the steps of pricing the work item, receiving requests for the work item from each of the plurality of mediator agents and providing the work item to the mediator agent offering the best price.

Embodiments of the invention will now be described, by way of example, with reference to the accompanying drawings, in which:
Figure 1 is a schematic system diagram;
Figure 2 shows the architecture of a conventional computer for use in the system of Figure 1;
Figure 3 illustrates the structure of a work allocation system in accordance with the invention;
Figure 4 is a flow chart illustrating the operation of the system of Figure 3;
Figure 5 is a schematic diagram illustrating the generation of a bidding strategy from an intermediate data structure;
Figure 6 illustrates the intermediate data structure used to generate a group classifier;
Figures 7a and 7b show an example of the way in which the data structure of Figure 6 is used; and
Figure 8 is a flow-chart illustrating the generation of the classifier from the data shown in Figures 7a and 7b.

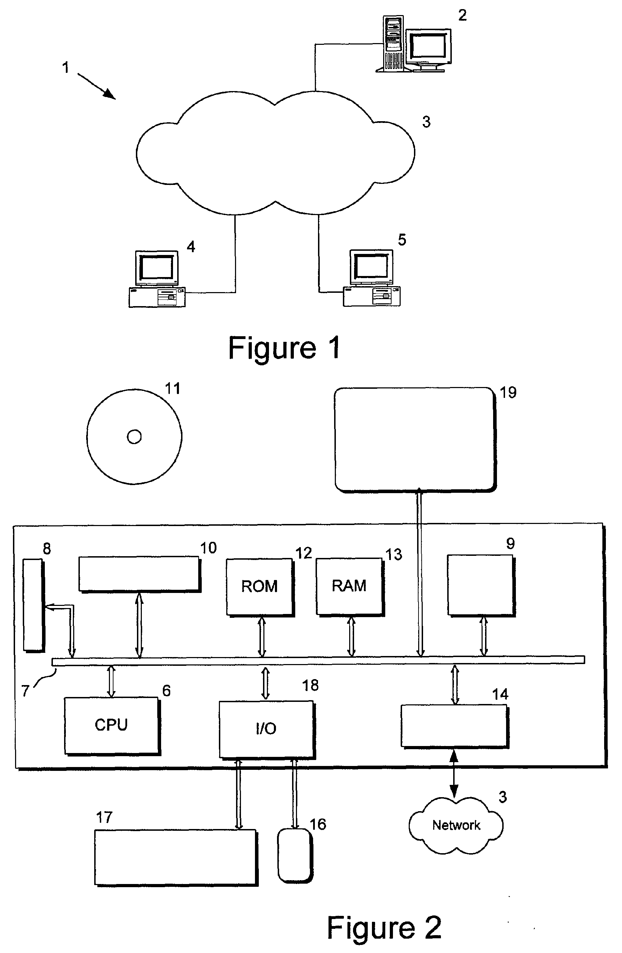

Referring to Figure 1, a work allocation system 1 according to the invention comprises a work allocation server 2 which communicates via a network 3, for example an intranet, with first and second workgroup terminals 4, 5. Work allocation system software runs on each of the computers 2, 4, 5 in the system.

A typical architecture of each of the system computers 2, 4, 5 on which software implementing the invention can be run, is shown in Figure 2. Each computer comprises a central processing unit (CPU) 6 for executing computer programs and managing and controlling the operation of the computer. The CPU 6 is connected to a number of devices via a bus 7, the devices including a read/write device 8, for example a floppy disk drive for reading and writing data to and from a removable storage medium such as a floppy disk, a storage device 9, for example a hard disk drive for storing system and application software, a CD/DVD-ROM drive 10 for reading data and programs from a CD/DVD disc 11 and memory devices including ROM 12 and RAM 13. The computer further includes a network card or modem 14 for interfacing to a network such as the intranet 3 and user input/output devices, including a mouse 16 and keyboard 17 connected to the bus 7 via an input/output port 18. Each computer 2, 4, 5 also includes a display 19. It will be understood by the skilled person that the above described architecture is not limiting, but is merely an example of a typical computer architecture. It will be further understood that the described computer has all the necessary operating system and application software to enable it to fulfil its purpose.

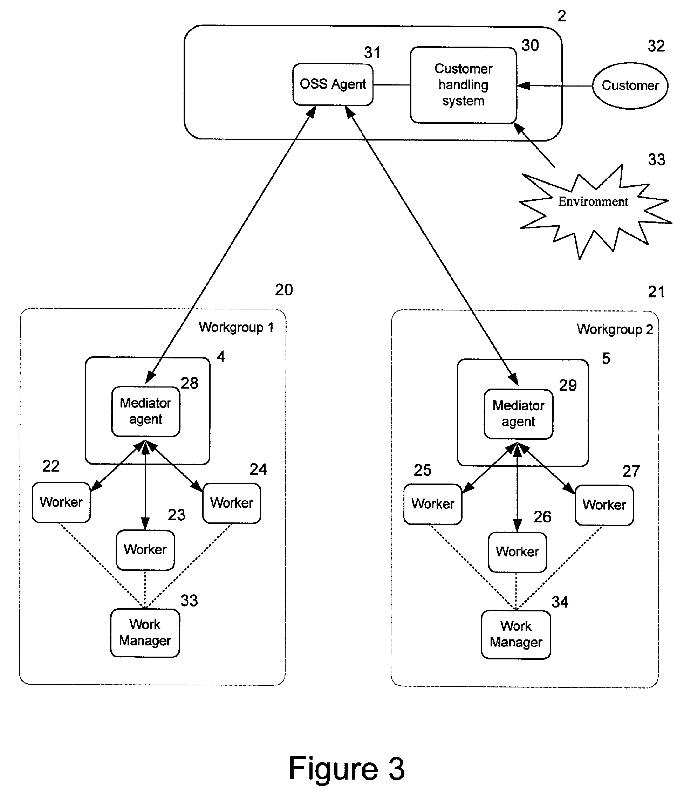

Figure 3 is a more detailed layout of the work allocation system 1 described above with reference to Figure 1. The work allocation server 2 comprises an operational support system (OSS) 2, for example a billing and work scheduling system. The OSS 2 is provided with, or generates, a definition of a work project to be carried out by one or more workgroups 20, 21. Each workgroup 20, 21 includes a plurality of workers 22-24; 25-27, each of whom has access to a workgroup terminal 4, 5. Each of the workgroup terminals 4, 5 runs a software program referred to herein as a mediator agent 28, 29, which is capable of communicating with the OSS 2 and each of a plurality of workers 22 - 27 in the workgroups 20, 21 via a graphical user interface (gui).

The operational support system (OSS) 2 includes a work item handler 30 and an OSS agent 31. Customers 32, or the environment 33, generate work items that are acquired by the work item handler 30, for example a customer handling system, maintenance schedule or fault detector. The acquired work items are then passed to the OSS agent 31 which interfaces with the mediator agent 28, 29 in each workgroup 20, 21.

The workers 22-24; 25-27 in each workgroup 20, 21 are supervised by respective work managers 33, 34.

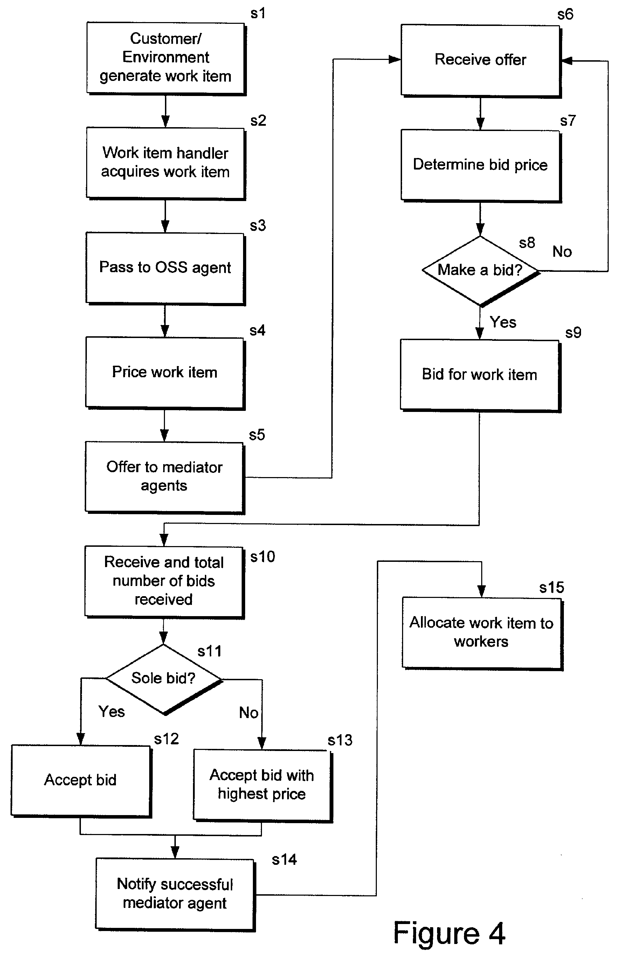

Figure 4 follows the allocation of a work item from its generation through to its completion. The work item is generated by a customer 32 or the environment 33 (step s1) and acquired by the work item handler (step s2). The work item handler passes the item to the OSS agent 31 (step s3). The OSS agent 31 prices the work item using a cost function that reflects its business priorities, for example the urgency of the work with respect to penalty clauses, or the value of the customer according to some model (step s4). For example, the OSS agent 31 will price urgent work low, so that it is easier for the mediator agents 28, 29 to buy it. The OSS agent 31 then offers the work item at the determined price to the mediator agents 28, 29 for each of the workgroups (step s5). The mediator agent 28, 29 for each workgroup receives the offer (step s6) and uses a cost function that reflects its local business priorities, and the preferences of its workgroup, to determine a price at which it is prepared to bid for the work (step s7). For example, the mediator agent makes a prediction as to whether it will be able to allocate the work to the workers based on its knowledge of the work item being offered as against the workers' work preferences. The prediction is based on the output from a workgroup classifier algorithm, which will be explained in detail below. At the same time, the mediator agent 28, 29 calculates whether the allocation of the work will meet its local business priorities, for example targets for total work time for its workgroup and therefore whether it should make a bid at all (step s8). As a result of the calculation, the mediator agent 28, 29 for the workgroup may decide not to bid for the work (step s8), but instead waits for the next offer on the next available work item (step s6). If the mediator agent 28, 29 decides that its local business priorities will be met, it makes a bid for the work item (step s9). The OSS agent 31 receives bids from all workgroups and determines how many bids it has received for the work item (step s10). If only one mediator agent makes a bid (step s11) that bid is accepted by the OSS agent 31 (step s12). If more than one mediator agent makes a bid (step s11), the OSS agent 31 accepts the bid at the highest price (step s13). For example, the OSS agent 31 provides a work item with a relatively high price P, indicating that the work item is categorised as desirable. The mediator agent 28 for the first workgroup 20 determines that it can allocate the work item to its workers, but its workgroup is relatively busy and cannot do the work urgently. It is therefore prepared to offer P for the work item. The mediator agent 29 for the second workgroup 21 also determines that it can allocate the work item to its workers, who are not very busy, so that the work item will assist the workgroup in reaching its targets. The second mediator agent 29 is therefore prepared to offer P+10 for the work item. In this case, the OSS agent 31 accepts the offer of P+10 from the second mediator agent 29 and allocates the work item to it.

The OSS agent 31 informs a selected mediator agent 29 that its bid has been successful (step s14). The mediator agent 29 then allocates/sells the work on to the workers (step s15). In essence, the mediator agent 29 sells the work to the workers by offering work that they want to do (it learns this over time, by looking at what work the worker buys from the market), at a price that offsets its investment in purchasing the work from the OSS agent 31.

The mediator agent 28, 29 prices work based on two factors, the value of the work to the overall business as expressed by the OSS agent 31, namely the cost price to the mediator and a model of the impact of a particular agent performing a piece of work on the overall efficiency of the team. To do this the mediator agent 28, 29 models the impact on the team's work schedule of each particular worker doing a piece of work and then prices the work accordingly.

For example, if two workers are in the market, the mediator agent 28, 29 works out, using the schedule and travel time estimates from their work manager 33, 34, which of the workers would most efficiently perform the work. This worker is offered the work at a slightly better price than the worker who would perform it less efficiently. The objective is to encourage the worker that the system judges should do the work to actually decide to do the work.

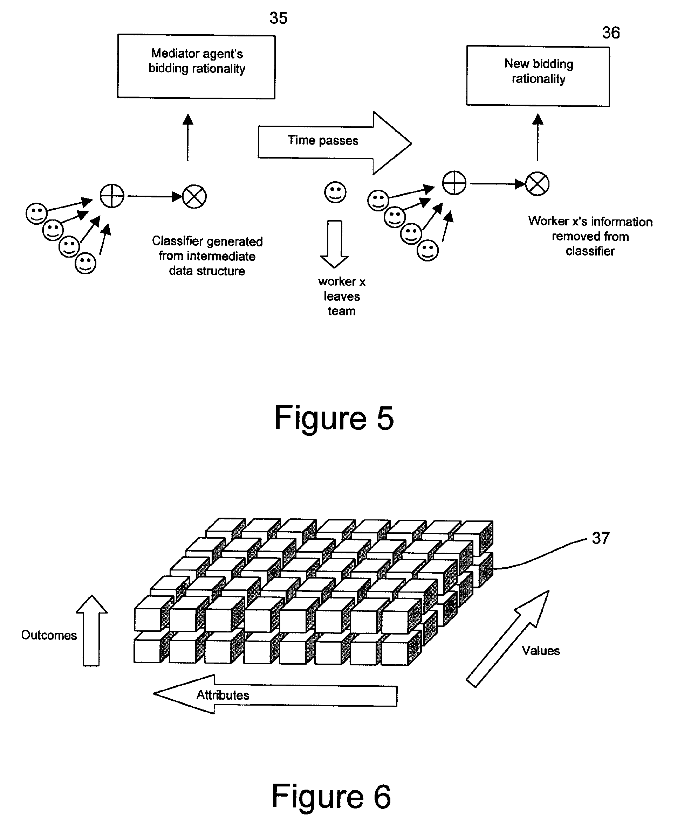

The preferences that each worker has for a particular work type are learned by the mediator agents 28, 29 in accordance with an algorithm described below and illustrated in Figure 5. The learned structures are used both to select work lists on behalf of individual workers and also to make decisions about the selection of work from the OSS agent 31. The algorithm constructs intermediate data structures and derives classifiers from them in a way which enables individual worker preferences to be added and removed from team decision making at any time, reflecting the fact that workers may migrate between teams or leave the organisation at any time. A mediator agent's initial bidding strategy 35 is based on the classifier generated from the intermediate data structure, which can be easily modified when a worker leaves the team to generate a new bidding strategy 36.

Figure 6 illustrates the data structure used. The number of occurrences of the class for each possible attribute value and attribute is stored in an l, a, v dimensional matrix where 1 is the number of labels for the data, a is the number of attributes and v is the number of values. Each label 1 represents a possible outcome or event. A particular cell 37 in the structure contains a count of the outcomes for a given attribute a and value v.

The intermediate data structure used is additive, so that new workers can be added in to the group simply by composing their records with the group's records. Information on a particular worker can be removed by querying the records database for the records of that worker, building a composite data structure for the worker and subtracting its contents from the team's composite data structure. The predictions from the composite data structure are then valid for the new team.

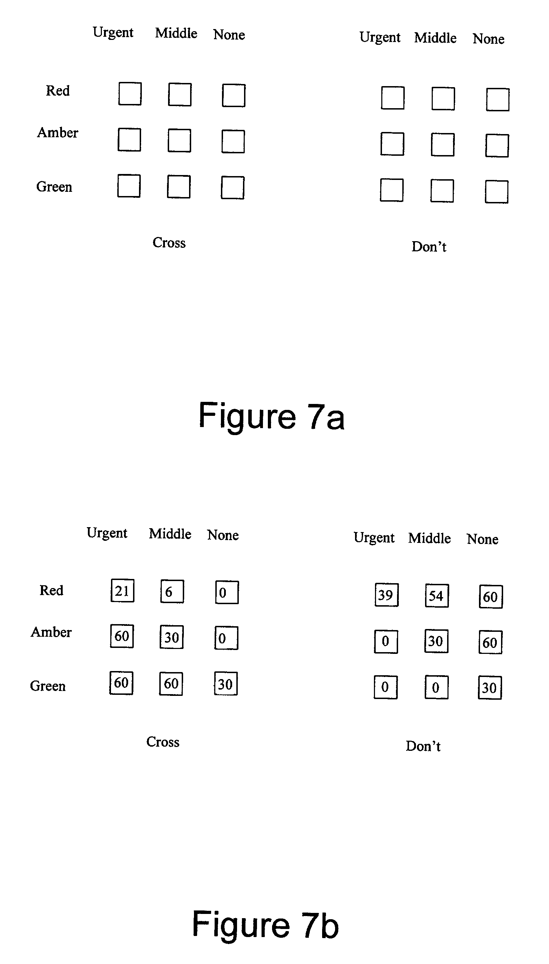

Figures 7a and 7b illustrate an example of the way in which the algorithm can be used to determine group preferences, which can be applied by analogy to the work allocation system.

For example, a data set contains decision making information for crossing the road with the following properties:
Attribute: LightColour { red, amber, green}
Attribute: Need {urgent, middle, none}
Labels : {cross, don't},

From this data set, the matrix shown in Figure 7a will be constructed. Assuming that three people are observed in order to determine the overall road crossing preference of the group, then Figure 7b shows an example of the values contained in the matrix after each person in the group has had 20 road crossing events.

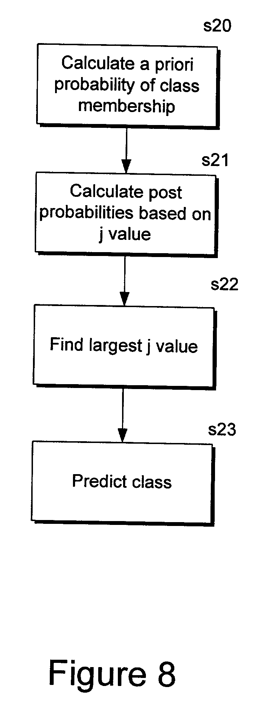

Referring to Figure 7b, the sum of the labels for each of the attribute-value pairs is 60, the total number of events. Classifications can be performed using this data set by the following procedure, illustrated in Figure 8:
1. Calculate the a-priori probability of class membership (the ratio of class membership to number of instances) (step s20)
2. Calculate the post probabilities of class membership based on the *j* value, as set out below (step s21)

The *j* value, attributable to P. Smyth and R. M. Goodman, 'An information theoretic approach to rule induction from databases,' IEEE Transactions on Knowledge and Data Engineering, vol.4, no.4, pp.301--316, August 1992 is calculated as follows: 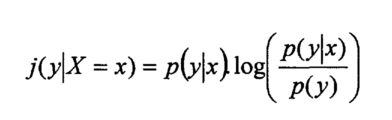 Where
*y* is the value of an outcome
x is the value of an attribute
X is an attribute
*j*(*y* |X=x) is the value of *j* for an outcome *y* when X is x.
*p*(*y*|*x*) is the probability of *y* when X=*x*, calculated by dividing the number of times an outcome has been *y* when the attribute value for the work item was *x*
*p*(*y*) is the probability of the outcome ever taking this value

The procedure then involves finding the largest j-value (step s22) and predicting the class that that attribute was selecting for (step s23). Basically, the algorithm looks for the most strongly predicting attribute-value pair in the event, and predicts based on the history of that attribute. *j* is calculated for each *y* for the value *x* which is taken by attribute X for all X. The *y* value with the highest *j* value is taken as the classification (predicted outcome) for the work item.

It is possible to find a composite value for all of the *j* values for a *y* for a work item by calculating as above and then summing all the *j*'s for each *y*. In this case the *y* with the highest composite value is taken as the classification of the work item.

Other approaches can be used in implementing the algorithm. For example, rather than selecting a class on the basis of the strongest signal found from any of the attribute value pairs, an alternative is to find the average of the j values for all attribute-value pairs for a class and then select the class with the highest signal value. An alternative to using a j-measure is to use a Bayes rule approach, another alternative is to use the information gain measure, for which reference is directed to R.Quinlan "Induction of decision trees" Machine Learning, 1; 81-106 (1986). A comparison of many well known measures can be found in I Kononenko "On Biases in Estimating Multi-Valued Attributes" In Mellish, C (ed). Proceedings of the International Joint Conference on Artificial Intelligence, 1995 (IJCAI '95). pp 1034-1040.

## Claims

1. A work allocation system for allocating work items between a plurality of workgroups, comprising:
a work source agent for providing a work item; and
a plurality of mediator agents, each associated with a respective workgroup;
wherein each of the mediator agents is configured to request the work item from the work source agent in dependence on preference data for its respective workgroup.

2. A work allocation system according to claim 1, wherein the work source agent is arranged to offer the work item to the mediator agents at a cost which depends on its operational priorities.

3. A work allocation system according to claim 2, wherein said priorities include the urgency of the work item.

4. A work allocation system according to claim 2 or 3, wherein said priorities include a value associated with an entity which originates the work item.

5. A work allocation system according to any one of the preceding claims, wherein each of the mediator agents bid for the work item in accordance with their respective operational priorities.

6. A work allocation system according to any one of the preceding claims, wherein each of the workgroups comprise a plurality of workers and the mediator agent for a given workgroup offers the work item to each of the workers at respective prices which depend on characteristics associated with each of the workers.

7. A work allocation system according to claim 6, wherein the characteristics include the efficiency with which a given worker can complete the work item.

8. A work allocation system according to claim 7, wherein the mediator agent is arranged to price the work item so that its value is greater to a more efficient worker.

9. A work allocation system according to any one of the preceding claims, wherein the preference data for a given workgroup comprises the preferences that each of the workers in the workgroup has for a particular type of work.

10. A work allocation system according to claim 9, wherein each of the mediator agents is arranged to learn the preference data for its workgroup.

11. A work allocation system according to claim 10, wherein each of the mediator agents is arranged to update the preference data when a worker joins or leaves its workgroup.

12. A method of allocating work items between a plurality of workgroups, in which a plurality of mediator agents, each associated with a respective workgroup, is arranged to request a work item from a work source agent, the method including the steps of:
pricing the work item;
receiving requests for the work item from each of the plurality of mediator agents; and
providing the work item to the mediator agent offering the best price.

13. A method according to claim 12, wherein each of the workgroups includes a plurality of workers, the method including pricing the work to be offered to the workers at a price for each of the workers which reflects the characteristics of the respective workers.
